# EUROPEAN PATENT APPLICATION

(11) **EP 2 818 893 A1**
(43) Date of publication of application: **31.12.2014**
(21) Application number: 13751844.5
(22) Date of filing: 05.02.2013
(51) Int. Cl.: G01S 19/30, G01S 19/28, G01S 19/37

(54) **POSITIONING SIGNAL DETECTION METHOD, POSITIONING SIGNAL DETECTION PROGRAM, POSITIONING SIGNAL RECEIVING DEVICE, POSITIONING APPARATUS AND INFORMATION DEVICE TERMINAL**

(30) Priority: 24.02.2012 JP 2012039246
(71) Applicant: Furuno Electric Co., Ltd., Hyogo 622-8580 (JP)
(72) Inventor: YAMASHINA, Katsuhisa, Nishinomiya-City Hyogo 662-8580 (JP); NAKAO, Hiroyuki, Nishinomiya-City Hyogo 662-8580 (JP)
(74) Representative: Williams, Michael Ian
(86) International application number: PCT/JP2013/052626
(87) International publication number: WO 2013/125344

(57) **Abstract**

Whether received positioning signals are target positioning signals is determined accurately. A first code phase difference of a first replica code signal of a positioning signal St_{A}(CODE_{A}) and a second code phase difference of a second replica code signal of a positioning signal St_{B}(CODE_{B}) are acquired (S101). A first pseudorange ρ1 is calculated based on the first code phase difference and a second pseudorange p2 is calculated based on the second code phase difference (S102). An absolute value of a pseudorange difference that is a differential value between the first pseudorange ρ1 and the second pseudorange p2 is calculated. If the absolute value of the pseudorange difference is lower than a threshold THc (S103: YES), the positioning signals of which codes are currently tracked are determined to be the positioning signals St_{A}(CODE_{A}) and St_{B}(CODE_{B}) from a target positioning satellite SATt (S104). If the absolute value of the pseudorange difference is higher than the threshold THc (S103: NO), cross-correlation is determined to have occurred (S105).

## Description

### TECHNICAL FIELD

The present invention relates to a positioning signal detecting method of detecting that target positioning signals are received.

### BACKGROUND ART

Currently, various GNSS (Global Navigation Satellite Systems), such as GPS (Global Positioning System), have been in operation.

In GNSS, a plurality of positioning satellites are prepared. Each positioning satellite uses a carrier wave signal of the same frequency. A particular code is set for each positioning satellite. Each positioning satellite generates a positioning signal by modulating the code of the carrier wave signal with the particular code and transmits it.

GNSS signal reception devices know the codes of the respective positioning satellites in advance, and by correlating replica codes generated by the device for the respective codes with the received positioning signals, they identify the respective positioning signals and use them in positioning.

With such GNSS, there is a problem of cross-correlation in which misidentification occurs between the positioning satellite as the transmission source of the received positioning signal and another positioning satellite. When the cross-correlation occurs, a problem arises, for example, positioning accuracy degrades.

Therefore, Patent Document 1 discloses a satellite signal determining device which utilizes that the GPS uses a plurality of carrier wave signals of different frequencies (L1 and L2 waves), and calculates a transmitted time for every carrier wave signal. With the satellite signal determining device of Patent Document 1, if the transmitted time of every carrier wave signal is substantially the same, these carrier wave signals are determined to have been transmitted from the same positioning satellite. Thus, whether the positioning satellite which is the transmission source of the positioning signals is a target positioning satellite, in other words, whether the received positioning signals are the target positioning signals, is detected.

### REFERENCE DOCUMENTS OF CONVENTIONAL ART

### Patent Document(s)

Patent Document 1: JP2008-076319A

### DISCLOSURE OF THE INVENTION

### [Problems to be Solved by the Invention]

However, with the method of JP2008-076319A, a plurality of carrier wave signals of different frequencies are required. Moreover, since the frequencies of the plurality of carrier wave signals are different, an ionospheric delay and a tropospheric delay are different, and it has been difficult to determine highly accurately, whether the transmitted time matches with each other. Thus, whether cross-correlation has occurred, in other words, if the received positioning signals are the target positioning signals, has been difficult to determine.

Therefore, the present invention aims to provide a positioning signal detecting method, which can determine whether received positioning signals are target positioning signals more accurately.

### [Summary of the Invention]

A method of detecting positioning signals of this invention has following features. The positioning signal detecting method includes setting a first replica code equivalent to a unique code of a first positioning signal and a second replica code equivalent to a unique code of a second positioning signal, the first and second positioning signals transmitted from a target positioning satellite. The method also includes code-correlating a first positioning signal with the first replica code set in the setting the first replica code, and a second positioning signal with the second replica code set in the setting the first replica code, the first and second positioning signals received from a single positioning satellite. The method also includes determining whether the received first and second positioning signals are the first and second positioning signals transmitted from the target positioning satellite, based on a similarity between the code correlation result of the first replica code and the code correlation result of the second replica code that are obtained by the code-correlation.

In this method, when the first positioning signal and the second positioning signal that have different codes to each other are received, whether these signals are the first and second positioning signals transmitted from the single target positioning satellite is determined based on the respective code correlation results with the first and second positioning signals. Therefore, as long as the code correlation results are obtained at least, an accurate determination result can be obtained without being influenced from a difference of carrier wave frequencies.

Further, the determining whether the received first and second positioning signals are the first and second positioning signals with the positioning signal detecting method of this invention may include calculating a first pseudorange based on the code correlation result of the first replica code, calculating a second pseudorange based on the code correlation result of the second replica code, and determining that the first and second positioning signals correlated with the respective replica codes are the first and second positioning signals transmitted from the target positioning satellite when a difference between the first and second pseudoranges is detected to be smaller than a predetermined threshold.

In this method, the case where the pseudorange is used for an example of the similarity is described. Since the pseudorange can be utilized for positioning, the determination of the target positioning signals can be performed without separately calculating a parameter to be used only for determining the target positioning signals.

Further, the positioning signal detecting method of this invention may also include carrier-correlating the received first positioning signal with a first carrier signal generated for the first positioning signal, and carrier-correlating the received second positioning signal with a second carrier signal generated for the second positioning signal. The determining whether the received first and second positioning signals are the first and second positioning signals may include determining whether the received first and second positioning signals are the first and second positioning signals transmitted from the target positioning satellite, based on a similarity between the carrier correlation result of the first positioning signal and the carrier correlation result of the second positioning signal that are obtained by the carrier-correlation.

In this method, since, not only the code correlation results, but also the carrier correlation results can be used, the first and second positioning signals transmitted from the target positioning satellite can be determined more highly accurately.

Further, the determining whether the received first and second positioning signals are the first and second positioning signals with the positioning signal detecting method of this invention may include calculating a first Doppler frequency based on the carrier correlation result of the first positioning signal, calculating a second Doppler frequency based on the carrier correlation result of the second positioning signal, and determining that the first and second positioning signals correlated with the respective replica codes are the first and second positioning signals transmitted from the target positioning satellite when a difference between the first and second Doppler frequencies is detected to be smaller than a predetermined threshold for Doppler frequency.

In this method, the case where the Doppler frequency is used for the similarity when using the carrier correlation results is described. Since the Doppler frequency can be used for positioning, the determination of the first and second positioning signals transmitted from the target positioning satellite can be performed without separately calculating a parameter to be used only for determining the target positioning signals.

This invention relates to a method of detecting a plurality of positioning signals transmitted from a single target positioning satellite (target satellite signal) and has following features. The positioning signal detecting method of this invention includes setting a plurality of replica codes to be generated in synchronization to each other, the plurality of replica codes equivalent to respective unique codes for modulating the plurality of positioning signals transmitted from the single target positioning satellite. The method also includes code-correlating a plurality of positioning signals with the plurality of replica codes, respectively. The method also includes determining whether the respective positioning signals are the positioning signals from the target positioning satellite, based on similarities among the code correlation results, each code correlation result being for every replica code and obtained by the code-correlation.

In this method, whether the positioning signals are the target positioning signals is determined based on the respective code correlation results by using the plurality of positioning signals having different codes and transmitted from the target positioning satellite. Therefore, as long as the code correlation results are obtained at least, an accurate determination result can be obtained without being influenced from a difference of carrier wave frequencies.

Further, in the positioning signals detecting method of this invention, carrier frequencies of the first and second positioning signals may be the same as each other. In this method, a specific example of the carrier wave frequencies of the first and second positioning signals is described.

Further, in the positioning signals detecting method of this invention, the target positioning satellite may be a quasi-zenith satellite. In this method, the case where the quasi-zenith satellite is set as the target positioning satellite is described.

### [Effect of the Invention]

According to this invention, whether the received positioning signals are the target positioning signals is determined highly accurately.

### BRIEF DESCRIPTION OF DRAWINGS

Fig. 1 is a schematic configuration diagram of a positioning system including a positioning signal reception device 10 according to a first embodiment of the present invention.
Fig. 2 is a block diagram illustrating a main functional part of the positioning signal reception device 10 according to the first embodiment of the present invention.
Fig. 3 is a block diagram illustrating a main functional part of a signal processor 30 according to the first embodiment of the present invention.
Fig. 4 is a flowchart illustrating a processing flow of a detecting method of target positioning signals, performed by an operator 33 according to the first embodiment of the present invention.
Fig. 5 is a block diagram illustrating a main functional part of a signal processor 30' according to a second embodiment of the present invention.
Fig. 6 is a block diagram illustrating a main configuration of an information equipment terminal 100 provided with the positioning signal reception device 10 according to the embodiments of the present invention.

### MODE(S) FOR CARRYING OUT THE INVENTION

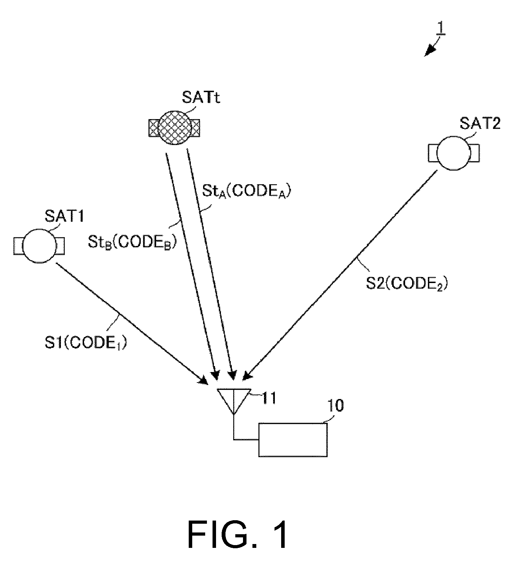

A positioning signal reception device and a positioning signal detecting method according to a first embodiment of the present invention are described with reference to the appended drawings. Fig. 1 is a schematic configuration diagram of a positioning system 1 including a positioning signal reception device 10 according to a first embodiment of the present invention.

Although the positioning system including the positioning signal reception device of this embodiment can be applied to respective systems of GNSS, hereinafter, the GPS is described as an example.

Positioning satellites SAT1 and SAT2 move along an orbit that is away from the earth by a predetermined distance. A positioning satellite SATt is a so-called quasi-zenith satellite, and moves along a predetermined orbit that is away from the earth by a predetermined distance. The positioning satellite SATt corresponds to a target positioning satellite in the present invention. Note that, in this embodiment, the quasi-zenith satellite is exemplarily described as the target positioning satellite; however, the configuration and processing of this embodiment can also be applied to a positioning satellite that transmits an L1-C signal in GPS, and a satellite of SBAS (Satellite Based Augmentation System).

The positioning satellite SAT1 transmits a positioning signal S1(CODE₁). The positioning satellite SAT2 transmits a positioning signal S2(CODE₂). The positioning signals S1(CODE₁) and S2(CODE₂) are formed of the same carrier wave frequency as each other. The positioning signal S1(CODE₁) is code-modulated with a particular code CODE₁ to the positioning satellite SAT1, and the positioning signal S2(CODE₂) is code-modulated with a particular code CODE₂ to the positioning satellite SAT2. The particular code CODE₁ of the positioning satellite SAT1 and the particular code CODE₂ of the positioning satellite SAT2 are different. The positioning signals S1(CODE₁) and S2(CODE₂) are superimposed with a GPS navigation message including ephemeris and almanac. Specifically, for example, the positioning signals S1(CODE₁) and S2(CODE₂) are so-called L1-C/A signals.

The positioning satellite SATt transmits a positioning signal St_{A}(CODE_{A}) and a positioning signal St_{B}(CODE_{B}). The positioning signals St_{A}(CODE_{A}) and St_{B}(CODE_{B}) are formed of the same carrier wave frequency as the positioning signals S1(CODE₁) and S2(CODE₂). The positioning signal St_{A}(CODE_{A}) is code-modulated with a first particular code CODE_{A} to the positioning satellite SATt, and the positioning signal St_{B}(CODE_{B}) is code-modulated with a second particular code CODE_{B} to the positioning satellite SATt. The first and second particular codes CODE_{A} and CODE_{B} are different.

The positioning signal St_{A}(CODE_{A}) is, similar to the positioning signals S1(CODE₁) and S2(CODE₂), superimposed with a GPS navigation message including ephemeris and almanac. Specifically, for example, the positioning signal St_{A}(CODE_{A}) is also a so-called L1-C/A signal, and is also referred to as a GPS supplemental signal.

The positioning signal St_{B}(CODE_{B}) is superimposed with GPS supplemental information. Specifically, the positioning signal St_{B}(CODE_{B}) is a so-called L1-SAIF signal, and also referred to as a GPS augmentation signal. Note that, in the case of using the SBAS satellite described above, the L1-SBAS signal corresponds to St_{B}(CODE_{B}). Moreover, with the system utilizing the L1-C signal described above, the L1-C signal corresponds to the positioning signal St_{B}(CODE_{B}).

The positioning signals St_{A}(CODE_{A}) and St_{B}(CODE_{B}) are synchronized and transmitted from the positioning satellite SATt.

As described above, the positioning signals St_{A}(CODE_{A}) and St_{B}(CODE_{B}) from the positioning satellite SATt, the positioning signal S1(CODE₁) from the positioning satellite SAT1, and the positioning signal S2(CODE₂) from the positioning satellite SAT2 are formed of the same carrier wave frequency. This means that, to be exact, transmission frequencies of the positioning signals St_{A}(CODE_{A}) and St_{B}(CODE_{B}) from the positioning satellite SATt, the positioning signal S1(CODE₁) from the positioning satellite SAT1, and the positioning signal S2(CODE₂) from the positioning satellite SAT2 are the same.

In reality, since distances, positional relations, and relative speeds of the respective positioning satellites with respect to the positioning signal reception device 10 are different from each other, a Doppler frequency influences each positioning signal. Therefore, frequencies received by the positioning signal reception device 10, in other words, reception frequencies are different among the positioning signals St_{A}(CODE_{A}) and St_{B}(CODE_{B}) from the positioning satellite SATt, the positioning signal S1(CODE₁) from the positioning satellite SAT1, and the positioning signal S2(CODE₂) from the positioning satellite SAT2. However, since St_{A}(CODE_{A}) and St_{B}(CODE_{B}) are transmitted from the same positioning satellite SATt, the reception frequencies thereof are also the same.

With the configuration and method of this embodiment, by using the positioning signals St_{A}(CODE_{A}) and St_{B}(CODE_{B}) of which the reception frequencies are the same as described above, whether the positioning signals St_{A}(CODE_{A}) and St_{B}(CODE_{B}) from the target positioning satellite SATt are accurately and successfully received can be determined by only using a code correlation result, without receiving the influence of the Doppler frequency.

The positioning signal reception device 10 is connected with an antenna 11. The antenna 11 receives the positioning signals S1(CODE₁), S2(CODE₂), St_{A}(CODE_{A}) and St_{B}(CODE_{B}) and outputs them to the positioning signal reception device 10. Note that, in the description of this embodiment, the example in which the positioning signals are received from the positioning satellites SAT1, SAT2 and SATt is described; however, the number of satellites to receive is not limited to this. Especially, in positioning the positioning signal reception device 10, it is preferred to receive positioning signals from four or more positioning satellites including the positioning satellite SATt.

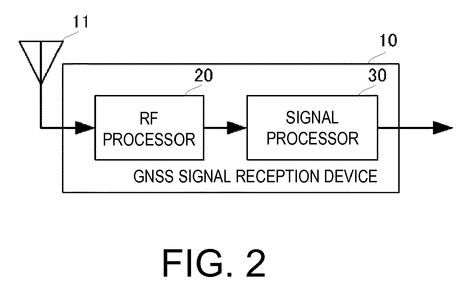

Fig. 2 is a block diagram illustrating a main functional part of the positioning signal reception device 10 of the first embodiment of the present invention. The positioning signal reception device 10 includes an RF processor 20 and a signal processor 30.

The RF processor 20 performs predetermined amplification on the positioning signals S1(CODE₁), S2(CODE₂), St_{A}(CODE_{A}) and St_{B}(CODE_{B}) received by the antenna 11, and down-converts them to medium frequencies. The RF processor 20 outputs the down-converted signals S1(CODE₁), S2(CODE₂), St_{A}(CODE_{A}) and St_{B}(CODE_{B}) to the signal processor 30.

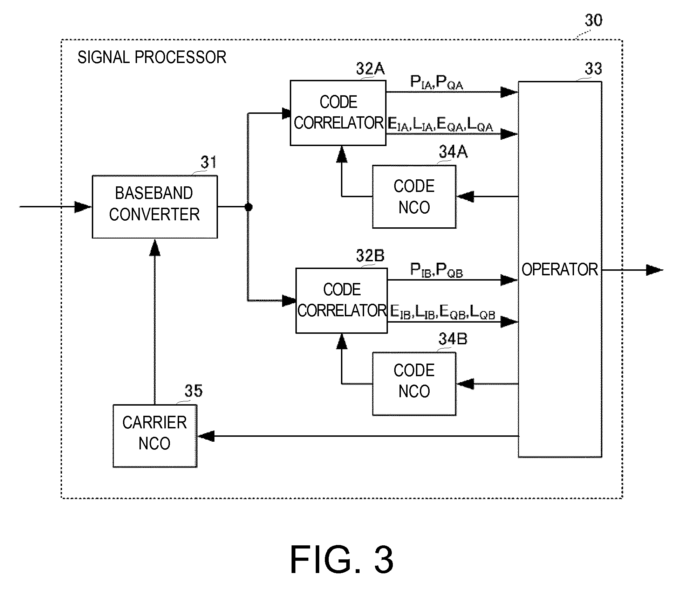

Fig. 3 is a block diagram illustrating a main functional part of the signal processor 30 of the first embodiment of the present invention. Note that, although a single channel for capturing and tracking the target positioning signals is described in Fig. 3, the number of signal processors corresponding to the number of the positioning satellites for performing the capturing and tracking are provided to the positioning signal reception device 10.

The signal processor 30 includes a baseband converter 31, code correlators 32A and 32B, an operator 33, code NCOs 34A and 34B, and a carrier NCO 35. The operator 33 has the functions of "the replica code setting module" and "the determining module" of the present invention.

Note that, hereinafter, only the positioning signals St_{A}(CODE_{A}) and St_{B}(CODE_{B}) transmitted from the target positioning satellite are described and the description of the processing on the other positioning signals S1(CODE₁) and S2(CODE₂) is omitted since it is known.

The positioning signals St_{A}(CODE_{A}) and St_{B}(CODE_{B}) outputted from the RF processor 20 are inputted to the baseband converter 31.

The baseband converter 31 generates a local frequency signal (carrier signal) based on the carrier frequency information outputted from the carrier NCO 35. The baseband converter 31 multiplies the positioning signals St_{A}(CODE_{A}) and St_{B}(CODE_{B}) by the local frequency signal to convert the positioning signals St_{A}(CODE_{A}) and St_{B}(CODE_{B}) into baseband signals. The positioning signals St_{A}(CODE_{A}) and St_{B}(CODE_{B}) converted into the baseband signals are inputted to the code correlators 32A and 32B.

The carrier NCO 35 outputs carrier frequency information of the local frequency signal for the baseband conversion to the baseband converter 31 based on frequency shift information applied from the operator 33.

The code correlator 32A receives the positioning signal St_{A}(CODE_{A}). The code correlator 32A receives code phase information from the code NCO 34A. The code correlator 32A generates a replica code signal (first replica code signal) based on the code phase information, and code-correlates the baseband signal inputted from the baseband converter 31 with the first replica code signal.

More specifically, the first replica code signal includes an I-phase prompt replica code signal R_{PIA}, an I-phase early replica code signal R_{EIA}, an I-phase late replica code signal R_{LIA}, a Q-phase prompt replica code signal R_{PQA}, a Q-phase early replica code signal R_{EQA}, and a Q-phase late replica code signal R_{LQA}.

The I-phase prompt replica code signal R_{PIA} is a replica code signal set such that its phase matches with a code phase of the positioning signal St_{A}(CODE_{A}) based on an immediate-previous code correlation result. The I-phase early replica code signal R_{EIA} is a replica code with its phase advanced from the I-phase prompt replica code signal R_{PIA} by a predetermined code phase. The I-phase late replica code signal R_{LIA} is a replica code with its phase advanced from the I-phase prompt replica code signal R_{PIA} by a predetermined code phase.

The Q-phase prompt replica code signal R_{PQA} is the I-phase prompt replica code signal R_{PIA} with its phase inverted. The Q-phase early replica code signal R_{EQA} is the I-phase early replica code signal R_{EIA} with its phase inverted. The Q-phase late replica code signal R_{LQA} is the I-phase late replica code signal R_{LIA} with its phase inverted.

The code correlator 32A correlates (multiplies) the positioning signal St_{A}(CODE_{A}) with (by) the I-phase prompt replica code signal R_{PIA} and outputs an I-phase prompt correlation value P_{IA} to the operator 33. The code correlator 32A correlates (multiplies) the positioning signal St_{A}(CODE_{A}) with (by) the Q-phase prompt replica code signal R_{PQA} and outputs a Q-phase prompt correlation value P_{QA} to the operator 33.

The code correlator 32A correlates (multiplies) the positioning signal St_{A}(CODE_{A}) with (by) the I-phase early replica code signal R_{EIA} and outputs an I-phase early correlation value E_{IA} to the operator 33. The code correlator 32A correlates (multiplies) the positioning signal St_{A}(CODE_{A}) with (by) the Q-phase early replica code signal R_{EQA} and outputs an Q-phase early correlation value E_{QA} to the operator 33.

The code correlator 32A correlates (multiplies) the positioning signal St_{A}(CODE_{A}) with (by) an I-phase late replica code signal R_{LIA} and outputs an I-phase late correlation value L_{IA} to the operator 33. The code correlator 32A correlates (multiplies) the positioning signal St_{A}(CODE_{A}) with (by) a Q-phase late replica code signal R_{LQA} and outputs a Q-phase late correlation value L_{QA} to the operator 33.

The code correlator 32B correlates (multiplies) the positioning signal St_{B}(CODE_{B}) with (by) an I-phase prompt replica code signal R_{PIB} and outputs an I-phase prompt correlation value P_{IB} to the operator 33. The code correlator 32B correlates (multiplies) the positioning signal St_{B}(CODE_{B}) with (by) a Q-phase prompt replica code signal R_{PQB} and outputs a Q-phase prompt correlation value P_{QB} to the operator 33.

The code correlator 32B correlates (multiplies) the positioning signal

St_{B}(CODE_{B}) with (by) an I-phase early replica code signal R_{EIB} and outputs an I-phase early correlation value E_{IB} to the operator 33. The code correlator 32B correlates (multiplies) the positioning signal St_{B}(CODE_{B}) with (by) a Q-phase early replica code signal R_{EQB} and outputs an Q-phase early correlation value E_{QB} to the operator 33.

The code correlator 32B correlates (multiplies) the positioning signal St_{B}(CODE_{B}) with (by) an I-phase late replica code signal R_{LIB} and outputs an I-phase late correlation value L_{IB} to the operator 33. The code correlator 32B correlates (multiplies) the positioning signal St_{B}(CODE_{B}) with (by) a Q-phase late replica code signal R_{LQB} and outputs a Q-phase late correlation value L_{QB} to the operator 33.

The operator 33 calculates a first code phase difference by using the I-phase and Q-phase early correlation values E_{IA} and E_{QA}, and the I-phase and Q-phase late correlation values L_{IA} and L_{QA}. The operator 33 calculates a first code shift amount based on the first code phase difference and outputs it the code NCO 34A. Based on an offset amount of the code phase of the I-phase prompt replica code signal R_{PIA} from the positioning signal St_{A}(CODE_{A}) detected from the current code correlation, the first code shift amount is set in a direction to match these code phases, for example.

The code NCO 34A determines code phase information based on the supplied first code shift amount and outputs it to the code correlator 32A. By such a configuration, a code tracking loop for the positioning signal St_{A}(CODE_{A}) is formed.

The operator 33 calculates a second code phase difference by using the I-phase and Q-phase early correlation values E_{IB} and E_{QB}, and the I-phase and Q-phase late correlation values L_{IB} and L_{QB}. The operator 33 calculates a second code shift amount based on the second code phase difference and outputs it to the code NCO 34B. Based on an offset amount of the code phase of the I-phase prompt replica code signal R_{PIB} from the positioning signal St_{B}(CODE_{B}) detected from the current code correlation, the second code shift amount is set in a direction to match these code phases, for example.

The code NCO 34B determines code phase information based on the supplied second code shift amount and outputs it to the code correlator 32B. By such a configuration, a code tracking loop for the positioning signal St_{B}(CODE_{B}) is formed.

The operator 33 calculates a carrier phase difference based on the I-phase and Q-phase prompt correlation values P_{IA} and P_{QA}. The operator 33 calculates a frequency shift amount based on the carrier phase difference and outputs it the carrier NCO 35. Based on an offset amount of the carrier phase of the I-phase prompt replica code signal R_{PIA} from the positioning signal St_{A}(CODE_{A}) detected from the current code correlation, the frequency shift amount is set in a direction to match these carrier phases, for example.

The carrier NCO 35 determines carrier frequency information based on the supplied frequency shift amount and outputs it to the baseband converter 31. By such a configuration, a carrier tracking loop for the positioning signals St_{A}(CODE_{A}) and St_{B}(CODE_{B}) is formed. Note that, in this embodiment, the example in which the carrier phase difference is calculated by using the I-phase and Q-phase prompt correlation values P_{IA} and P_{QA} which are obtained based on the positioning signal St_{A}(CODE_{A}) is described; however, the carrier phase difference may be calculated by using the I-phase and Q-phase prompt correlation values P_{IB} and P_{QB} which are obtained based on the positioning signal St_{B}(CODE_{B}).

The operator 33 functions as a part of the carrier tracking loop and a part of the code tracking loop as described above, and determines whether the positioning signals St_{A}(CODE_{A}) and St_{B}(CODE_{B}) from the target positioning satellite SATt are accurately and successfully received.

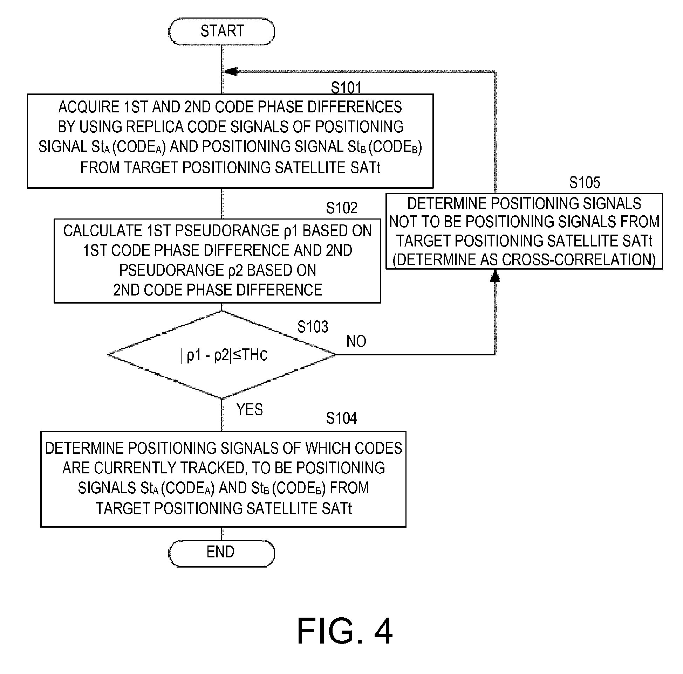

Fig. 4 is a flowchart illustrating a processing flow of the detecting method of the target positioning signals, performed by the operator 33.

The operator 33 performs the code tracking as described above, and at the same time, acquires the first code phase difference described above for the positioning signal St_{A}(CODE_{A}) from the target positioning satellite SATt, and the second code phase difference described above for the positioning signal St_{B}(CODE_{B}) from the target positioning satellite SATt (S101).

The operator 33 calculates a first pseudorange p1 based on the first code phase difference. The operator 33 calculates a second pseudorange p2 based on the second code phase difference (S102).

The operator 33 calculates an absolute value of a pseudorange difference that is a differential value of the first pseudorange ρ1 and the second pseudorange p2. The operator 33 compares the absolute value of the pseudorange difference with a pre-set threshold THc. The threshold THc is set to substantially "0." This is based on that the pseudorange of each positioning signal basically matches with each other in the case where the positioning signals of the same frequency transmitted at the same timing from a single positioning satellite are received by the positioning signal reception device 10 because an ionospheric delay difference and a tropospheric delay difference between the positioning signals do not occur. Note that, the threshold THc can be adjusted suitably by taking, for example, an error which the positioning signal reception device itself has into account.

If the absolute value of the pseudorange difference is lower than the threshold THc (S103: YES), the operator 33 determines that the positioning signals of which codes are currently tracked are the positioning signals St_{A}(CODE_{A}) and St_{B}(CODE_{B}) from the target positioning satellite SATt (S104).

If the absolute value of the pseudorange difference is higher than the threshold THc (S103: NO), the operator 33 determines that the positioning signals of which codes are currently tracked by the code correlators 32A and 32B of the signal processor 30 are not the positioning signals St_{A}(CODE_{A}) and St_{B}(CODE_{B}) from the target positioning satellite SATt. In other words, the operator 33 determines that cross-correlation has occurred (S105). When the cross-correlation is determined to have occurred, the operator 33 invalidates the current code tracking result and performs the code capturing and tracking by using the first and second replica code signals again.

Note that, when the similar navigation message to other L1-C/A signal is included as the case of the positioning signal St_{A}(CODE_{A}) of this embodiment, the operator 33 demodulates the navigation message from the positioning signal St_{A}(CODE_{A}) to acquire positional information from ephemeris and almanac. The operator 33 compares the positional information from the demodulated ephemeris and the positional information of the positioning satellite SATt obtained from the almanac, and if these information substantially matches with each other, the operator 33 may determine that the positioning signal of which code is currently tracked by the first replica code signal is the positioning signal St_{A}(CODE_{A}).

By using the above configuration and method, whether the plurality of positioning signals St_{A}(CODE_{A}) and St_{B}(CODE_{B}) from the single target positioning satellite SATt are successfully received can be determined more accurately (exactly) compared to the conventional configuration and method.

Note that, in the above description, the example is described, in which the method of detecting the positioning signals from the target positioning satellite described above is achieved by the configuration illustrated in the function block diagram. However, the method may be stored in the memory by being programmed, and the program may be operated by the CPU to execute the method of detecting the positioning signals from the target positioning satellite.

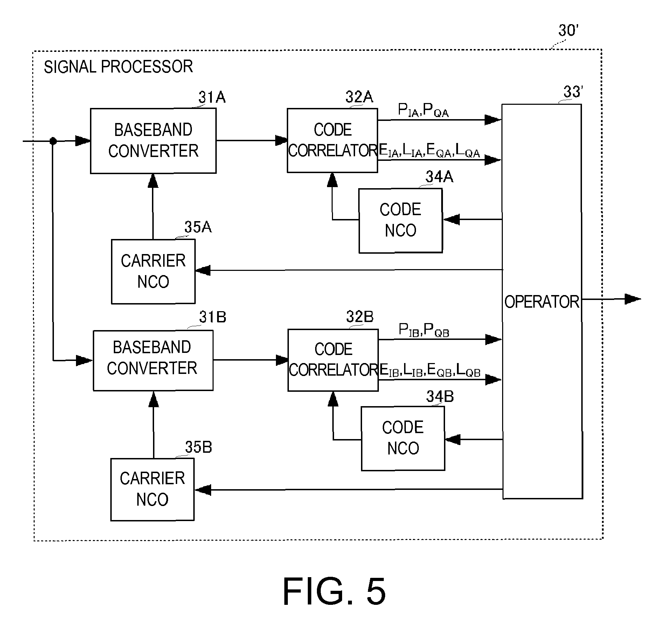

Next, a positioning signal reception device and a positioning signal detecting method of a second embodiment are described with reference to the appended drawings. Fig. 5 is a block diagram illustrating a main functional part of a signal processor 30' of the second embodiment of the present invention.

In the positioning signal reception device of this embodiment, the configuration of the signal processor 30' is different from that of the signal processor 30 described in the first embodiment, and other configuration is the same as the first embodiment. Therefore, the configuration of the signal processor 30' is described in detail.

The signal processor 30' of this embodiment, schematically, includes a baseband converter, a code correlator, a code NCO, and a carrier NCO for every positioning satellite to capture and track. For example, in the case of Fig. 5, the signal processor 30' includes a group of a baseband converter 31A, a code correlator 32A, a code NCO 34A, and a carrier NCO 35A, and a group of a baseband converter 31B, a code correlator 32B, a code NCO 34B, and a carrier NCO 35B.

The functions of the baseband converters 31A and 31B are basically the same as the baseband converter 31 described in the first embodiment. The functions of the carrier NCOs 35A and 35B are basically the same as the carrier NCO 35 described in the first embodiment. The code correlators 32A and 32B and the code NCOs 34A and 34B are the same as the first embodiment.

The group of the baseband converter 31A, the code correlator 32A, the code NCO 34A, and the carrier NCO 35A is for the positioning signal St_{A}(CODE_{A}). The positioning signal St_{A}(CODE_{A}) and a first carrier signal that is a local frequency signal for the positioning signal St_{A}(CODE_{A}) are correlated by the baseband converter 31A and the carrier NCO 35A.

The group of the baseband converter 31B, the code correlator 32B, the code NCO 34B, and the carrier NCO 35B is for the positioning signal St_{B}(CODE_{B}). The positioning signal St_{B}(CODE_{B}) and a second carrier signal that is a local frequency signal for the positioning signal St_{B}(CODE_{B}) are correlated by the baseband converter 31B and the carrier NCO 35B.

The operator 33' calculates a first carrier phase difference (a carrier phase difference using the first carrier signal) for the positioning signal St_{A}(CODE_{A}) based on the I-phase and Q-phase prompt correlation values P_{IA} and P_{QA}. The operator 33' calculates a frequency shift amount based on the first carrier phase difference for the positioning signal St_{A}(CODE_{A}), and outputs it to the carrier NCO 35A. The carrier NCO 35A determines to carrier frequency information for the positioning signal St_{A}(CODE_{A}) based on the frequency shift amount, and outputs it to the baseband converter 31A.

The operator 33' calculates a second carrier phase difference (a carrier phase difference using the second carrier signal) for the positioning signal St_{B}(CODE_{B}) based on the I-phase and Q-phase prompt correlation values P_{IB} and P_{QB}. The operator 33' calculates a frequency shift amount based on the second carrier phase difference for the positioning signal St_{B}(CODE_{B}), and outputs it to the carrier NCO 35B. The carrier NCO 35B determines to carrier frequency information for the positioning signal St_{B}(CODE_{B}) based on the frequency shift amount, and outputs it to the baseband converter 31B.

By such a configuration, the carrier tracking loop and the code tracking loop can be formed individually for every positioning signal.

The operator 33' calculates a first pseudorange ρ1 based on the first code phase difference outputted from the code correlator 33A. The operator 33' calculates a second pseudorange p2 based on the second code phase difference outputted from the code correlator 33B.

The operator 33' calculates a first Doppler frequency Δρ1 based on the first carrier phase difference between the I-phase and Q-phase prompt correlation values P_{IA} and P_{QA}. The operator 33' calculates a second Doppler frequency Δρ2 based on the second carrier phase difference between the I-phase and Q-phase prompt correlation values P_{IB} and P_{QB}.

The operator 33' calculates an absolute value of a pseudorange differential value that is a differential value between the first pseudorange ρ1 and the second pseudorange p2. The operator 33' calculates an absolute value of a Doppler frequency differential value that is a differential value between the first Doppler frequency Δρ1 and the second Doppler frequency Δρ2.

Here, the Doppler frequency differential value is also substantially "0" for a similar reason to the pseudorange differential value described above in the first embodiment. Therefore, similar to the absolute value of the pseudorange differential value, a threshold for detecting the target positioning signals can be set. In other words, when the absolute value of the Doppler frequency differential value is lower than the threshold, it is determined that the target positioning signals are received; whereas, when the absolute value of the Doppler frequency differential value is higher than the threshold, it can be determined that the cross-correlation has occurred.

The operator 33' performs the reception determination of the target positioning signals by the absolute value of the pseudorange differential value as described above, as well as performs the reception determination of the target positioning signals by the absolute value of the Doppler frequency differential value. The operator 33' uses results of these determinations to determine whether the target positioning signals are successfully received and whether the cross-correlation has occurred. In this case, whether to prioritize the result of the determination based on the absolute value of the pseudorange differential value or the result of the determination based on the absolute value of the Doppler frequency differential value can be suitably set.

Moreover, it may be such that the positioning signals from the single target positioning satellite are determined to be received only when it is determined that the positioning signals from the single target positioning satellite are received based on the absolute value of the pseudorange differential value and also it is determined that the positioning signals from the single target positioning satellite are received based on the absolute value of the Doppler frequency differential value. In this case, more accurate determination result can be obtained.

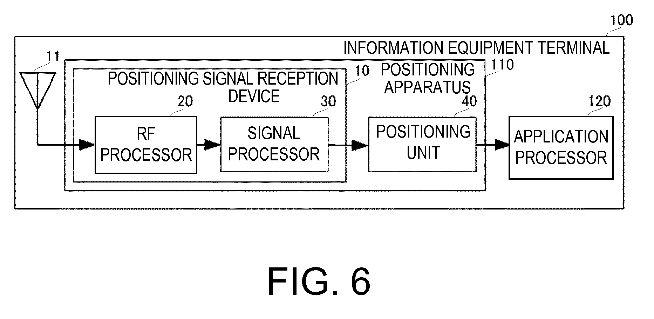

Such positioning signal reception device 10 and positioning signal detecting function can be utilized to an information equipment terminal 100 provided with a positioning apparatus 110 as illustrated in Fig. 6. Fig. 6 is a block diagram illustrating a main configuration of the information equipment terminal 100 provided with the positioning signal reception device 10 of the embodiments of the present invention.

The information equipment terminal 100 illustrated in Fig. 6 is, for example, a mobile phone, a car navigation device, a PND, a camera, a clock, and a frequency generator, and the information equipment terminal 100 includes the antenna 11, the positioning apparatus 110, and an application processor 120. The positioning apparatus 110 includes the positioning signal reception device 10 described above and a positioning unit 40.

The configurations of the antenna 11 and the positioning signal reception device 10 are as described above. The positioning signal reception device 10 determines whether the target positioning signals are successfully received as described above, and when they are determined to be successfully received, the positioning signal reception device 10 outputs the pseudorange, the navigation message, and the Doppler frequency acquired from the target positioning signals to the positioning unit 40.

The positioning unit 40 performs the positioning of the information equipment terminal 100 with a known method by using the pseudorange, the navigation message, and the Doppler frequency from the positioning signal reception device 10. Since the positioning signal reception device 10 has the above configuration, the positioning result does not receive the influence of cross-correlation. Therefore, the positioning unit 40 can derive highly accurate positioning result.

The application processor 120 displays a position and a speed of the positioning apparatus 110 and performs processing to be utilized for navigation and the like, based on the positioning result outputted from the positioning apparatus 110.

By such a configuration, since the highly accurate positioning result as described above can be obtained, highly accurate position display, navigation and the like can be achieved.

Note that, in the above description, whether the target positioning signals are successfully received is determined by using either one of the pseudorange and the Doppler frequency. However, whether the positioning signals from the single target positioning satellite are successfully received may be determined by directly using the code phase difference and the carrier phase difference.

## Claims

1. A method of detecting positioning signals, comprising:
setting a first replica code equivalent to a unique code of a first positioning signal and a second replica code equivalent to a unique code of a second positioning signal, the first and second positioning signals transmitted from a target positioning satellite;
code-correlating a first positioning signal with the first replica code set in the setting the first replica code, and a second positioning signal with the second replica code set in the setting the first replica code, the first and second positioning signals received from a single positioning satellite; and
determining whether the received first and second positioning signals are the first and second positioning signals transmitted from the target positioning satellite, based on a similarity between the code correlation result of the first replica code and the code correlation result of the second replica code that are obtained by the code-correlation.

2. The method of detecting the positioning signals of Claim 1, wherein the determining whether the received first and second positioning signals are the first and second positioning signals includes:
calculating a first pseudorange based on the code correlation result of the first replica code;
calculating a second pseudorange based on the code correlation result of the second replica code; and
determining that the first and second positioning signals correlated with the respective replica codes are the first and second positioning signals transmitted from the target positioning satellite when a difference between the first and second pseudoranges is detected to be smaller than a predetermined threshold.

3. The method of detecting the positioning signals of Claim 1 or 2, further comprising carrier-correlating the received first positioning signal with a first carrier signal generated for the first positioning signal, and carrier-correlating the received second positioning signal with a second carrier signal generated for the second positioning signal,
wherein the determining whether the received first and second positioning signals are the first and second positioning signals includes determining whether the received first and second positioning signals are the first and second positioning signals transmitted from the target positioning satellite, based on a similarity between the carrier correlation result of the first positioning signal and the carrier correlation result of the second positioning signal that are obtained by the carrier-correlation.

4. The method of detecting the positioning signals of Claim 3, wherein the determining whether the received first and second positioning signals are the first and second positioning signals includes:
calculating a first Doppler frequency based on the carrier correlation result of the first positioning signal;
calculating a second Doppler frequency based on the carrier correlation result of the second positioning signal; and
determining that the first and second positioning signals correlated with the respective replica codes are the first and second positioning signals transmitted from the target positioning satellite when a difference between the first and second Doppler frequencies is detected to be smaller than a predetermined threshold for Doppler frequency.

5. The method of detecting the positioning signals of any one of Claims 1 to 4, wherein reception frequencies of the first and second positioning signals are the same as each other.

6. The method of detecting the positioning signals of any one of Claims 1 to 5, wherein the target positioning satellite is a quasi-zenith satellite.

7. A method of detecting positioning signals, comprising:
setting a plurality of replica codes equivalent to respective unique codes of a plurality of positioning signals transmitted from a single target positioning satellite;
code-correlating the positioning signals received by a single positioning satellite, with the replica codes set in the setting the plurality of replica codes, respectively; and
determining whether the respective received positioning signals are the positioning signals from the single target positioning satellite, based on similarities among the code correlation results, each code correlation result being for every replica code and obtained by the code-correlation.

8. A program of detecting positioning signals, set to be executed by a computer, comprising:
setting a first replica code equivalent to a unique code of a first positioning signal and a second replica code equivalent to a unique code of a second positioning signal, the first and second positioning signals transmitted from a target positioning satellite;
code-correlating a first positioning signal with the first replica code set in the setting the first replica code, and a second positioning signal with the second replica code set in the setting the first replica code, the first and second positioning signals received from a single positioning satellite; and
determining whether the received first and second positioning signals are the first and second positioning signals transmitted from the target positioning satellite, based on a similarity between the code correlation result of the first replica code and the code correlation result of the second replica code that are obtained by the code-correlation.

9. The program of detecting the positioning signals of Claim 8, wherein the determining whether the received first and second positioning signals are the first and second positioning signals includes:
calculating a first pseudorange based on the code correlation result of the first replica code;
calculating a second pseudorange based on the code correlation result of the second replica code; and
determining that the first and second positioning signals correlated with the respective replica codes are the first and second positioning signals transmitted from the target positioning satellite when a difference between the first and second pseudoranges is detected to be smaller than a predetermined threshold.

10. The program of detecting the positioning signals of Claim 8 or 9, further comprising carrier-correlating the received first positioning signal with a first carrier signal generated for the first positioning signal, and carrier-correlating the received second positioning signal with a second carrier signal generated for the second positioning signal,
wherein the determining whether the received first and second positioning signals are the first and second positioning signals includes determining whether the received first and second positioning signals are the first and second positioning signals transmitted from the target positioning satellite, based on a similarity between the carrier correlation result of the first positioning signal and the carrier correlation result of the second positioning signal that are obtained by the carrier-correlation.

11. The program of detecting the positioning signals of Claim 10, wherein the determining whether the received first and second positioning signals are the first and second positioning signals includes:
calculating a first Doppler frequency based on the carrier correlation result of the first positioning signal;
calculating a second Doppler frequency based on the carrier correlation result of the second positioning signal; and
determining that the first and second positioning signals correlated with the respective replica codes are the first and second positioning signals transmitted from the target positioning satellite when a difference between the first and second Doppler frequencies is detected to be smaller than a predetermined threshold for Doppler frequency.

12. A program of detecting positioning signals, set to be executed by a computer, comprising:
setting a plurality of replica codes equivalent to respective unique codes of a plurality of positioning signals transmitted from a single target positioning satellite;
code-correlating the positioning signals received by a single positioning satellite, with the replica codes set in the setting the plurality of replica codes, respectively; and
determining whether the respective received positioning signals are the positioning signals from the single target positioning satellite, based on similarities among the code correlation results, each code correlation result being for every replica code and obtained by the code-correlation.

13. A positioning signal reception device, comprising:
a replica code setting module configured to set a first replica code equivalent to a unique code of a first positioning signal and a second replica code equivalent to a unique code of a second positioning signal, the first and second positioning signals transmitted from a target positioning satellite;
code correlators configured to code-correlate a first positioning signal with the first replica code set in the setting the first replica code, and a second positioning signal with the second replica code set in the setting the first replica code, the first and second positioning signals received from a single positioning satellite; and
a determining module configured to determine whether the received first and second positioning signals are the first and second positioning signals transmitted from the target positioning satellite, based on a similarity between the code correlation result of the first replica code and the code correlation result of the second replica code that are obtained by the code correlation.

14. The positioning signal reception device of Claim 13, wherein the determining module calculates a first pseudorange based on the code correlation result of the first replica code, calculates a second pseudorange based on the code correlation result of the second replica code, and determines that the first and second positioning signals correlated with the respective replica codes are the first and second positioning signals transmitted from the target positioning satellite when a difference between the first and second pseudoranges is detected to be smaller than a predetermined threshold.

15. The positioning signal reception device of Claim 13 or 14, further comprising a carrier correlator configured to carrier-correlate the received first positioning signal with a first carrier signal generated for the first positioning signal, and carrier-correlate the received second positioning signal with a second carrier signal generated for the second positioning signal,
wherein the determining module determines whether the received first and second positioning signals are the first and second positioning signals transmitted from the target positioning satellite, based on a similarity between the carrier correlation result of the first positioning signal and the carrier correlation result of the second positioning signal that are obtained by the carrier correlation.

16. The positioning signal reception device of Claim 15, wherein the determining module calculates a first Doppler frequency based on the carrier correlation result of the first positioning signal, calculates a second Doppler frequency based on the carrier correlation result of the second positioning signal, and determines that the first and second positioning signals correlated with the respective replica codes are the first and second positioning signals transmitted from the target positioning satellite when a difference between the first and second Doppler frequencies is detected to be smaller than a predetermined threshold for Doppler frequency.

17. A positioning signal reception device, comprising:
a replica code setting module configured to set a plurality of replica codes equivalent to respective unique codes of a plurality of positioning signals transmitted from a single target positioning satellite;
a code correlator configured to code-correlate the positioning signals received by a single positioning satellite, with the replica codes set in the setting the plurality of replica codes, respectively; and
a determining module configured to determine whether the respective received positioning signals are the positioning signals from the single target positioning satellite, based on similarities among the code correlation results, each code correlation result being for every replica code and obtained by the code-correlation.

18. A positioning apparatus, comprising:
the positioning signal reception device of any one of Claims 13 to 17; and
a positioning unit configured to perform positioning by using the correlation result of the positioning signals determined to be the positioning signals from the single target positioning satellites.

19. An information equipment terminal, comprising:
the positioning apparatus of Claim 18; and
an application processor configured to execute a predetermined application by using the positioning result of the positioning apparatus.
